# EUROPEAN PATENT SPECIFICATION

(11) **EP 2 575 320 B1**
(45) Date of publication and mention of the grant of the patent: **01.08.2018**
(21) Application number: 12186482.1
(22) Date of filing: 18.10.2007
(51) Int. Cl.: H04L 29/06, H04W 36/00

(54) **Telecommunications system and method for inter access network handover**
Telekommunikationssystem und Verfahren für die Netzwerkübergabe zwischen Zugriffen
Système de télécommunications et procédé pour transfert de réseau entre accès

(30) Priority: 19.10.2006 GB 0620826
(43) Date of publication of application: 03.04.2013
(62) Divisional of application: 07824224.5
(73) Proprietor: 3G Licensing S.A., 2132 Luxembourg (LU)
(72) Inventor: Chen, Xiaobao, Bath, Bath and North East Somerset BA2 6SQ (GB)
(74) Representative: Camolese, Marco

(56) References cited:
- WO-A-2006/105223
- US-A1- 2006 154 665
- US-A1- 2006 209 805

## Description

### Field of Invention

The present invention relates to telecommunications systems which include internet protocol multimedia systems operable to deploy internet protocol multimedia services to communications terminals. The present invention also relates to internet protocol systems and methods for deploying internet protocol services to communications terminals.

Embodiments of the present invention can provide a facility for maintaining a communications session as a mobile communications terminal roams from a first mobile access network to a second mobile access network to the effect of reducing an interruption in the communication of internet protocol packets as a result of the hand over from the first mobile access network to the second mobile access network.

### Background of the Invention

Internet protocol multimedia systems provide a facility for deploying multimedia communications services to communications terminals which are engaged in multimedia communications sessions. For example, the internet protocol multimedia sub-system (IMS) as specified in the 3GPP telecommunications standard TS 23.228V7.4.0 (2006-06) provides a specification of an internet multimedia system or sub-system which utilises internet protocol communications to provide multimedia services to communications terminals.

Telecommunications systems can provide a facility to support communications sessions as communications terminals which are mobile roam throughout a wireless access network coverage area. There are techniques for allowing a mobile communications terminal to handover between an access point of a mobile access network to a second access point of the mobile access network. In some situations it will be necessary for a mobile communications terminal to handover from a first mobile access network to a second mobile access network. Furthermore, the first and second access networks may be operating in accordance with different telecommunications standards. For example, one access network may support 2G circuit switched data communications, such as 2G/GSM and another access network may operate to provide packet switched data communications, such as a 3G/GPRS, WiFi or WiMax access technologies. Indeed in such situations it will be more efficient to communicate internet packets via a 2G/GSM communications network than a WiFi network and in other situations the reverse may be true. For example, when a mobile terminal enters a building it may be more efficient in terms of quality of service and communications resources consumed to communicate via the WiFi network rather than the 2G/GSM access network. However, if a mobile terminal is currently conducting a communications session as the mobile terminal hands over from one access network to another, there may be a loss of internet protocol packets if there is a delay between handing over from a first access network to a second access network. Whilst for some services such as the communication of data as for example e-mails or text messages the delay may not be critical and may not result in a loss of internet protocol packets, in other examples such as delay critical services for example voice over Internet Protocol (IP), a delay between a handover between one access network and another may cause either the internet protocol packets to be lost or rendered unusable as a result of a delay in the handover.

Known systems for a mobile terminal to handover between one access network and another include what is referred to as "dual radio". Dual radio provides a plurality of radio access interfaces so that the mobile terminal can establish a communications bearer on a target access network whilst still communicating via a previous access network. However, providing mobile terminals with dual radio interfaces is both costly in terms of hardware and in terms of power consumption, because two radio access interfaces must operate contemporaneously and also communications resources used by the mobile terminal. Therefore, it is desirable that a mobile communications terminal should handover from one access network to another whilst using only a single radio access interface at any one time. However, if only one radio access interface is to be active at any one time, then the mobile terminal must break communications with the previous mobile access network before becoming affiliated with the target mobile access network. This is a so called "make-after-break". As a result, there may be an increase in delay between a handover between the previous mobile access network and a target mobile access network. For delay critical services such as voice over IP this break should be minimised as far as possible.

US 2006/209805, WO 2006/105223 and US 2006/154665 describe related systems of the prior art.

### Summary of Invention

According to the present invention there is provided a method of providing an internet protocol communications service according to claim 1 and an Internet Protocol Multimedia Subsystem, IMS according to claim 8 operable to provide an internet protocol communications service to a mobile terminal. Further embodiments are provided in the dependent claims. The internet protocol multimedia system is arranged to register the mobile terminal for deploying multimedia communications sessions, the registration including authentication and authorisation of the mobile terminal. The mobile terminal is operable as a calling terminal to communicate a set up request message for requesting a bearer channel via a first mobile access network for communicating internet protocol packets to and from a correspondent node acting as a called terminal to support a communications session with the correspondent terminal. The first mobile access network is operable to communicate a session set up message to the internet protocol multimedia system, the session set up message including an identifier of the mobile terminal and an identifier of the correspondent terminal. The internet protocol multimedia system is operable to initiate a communications session with the correspondent terminal. Consequent upon the mobile user equipment roaming from the first mobile access network to a second mobile access network and requesting a communications bearer from the second mobile access network for continuing the communications session via the second mobile access network, the internet protocol multimedia system is operable to establish the communications bearer via the second mobile access network and to communicate a confirmation message to the mobile terminal via the second mobile access network to provide the communications bearer via the second mobile access network for continuing the communications session with the correspondent terminal via the second mobile access network.

Embodiments of the present invention can provide an arrangement in which a mobile terminal can handover from a circuit switched access network to a packet switched access network as well as from a packet switched access network to a circuit switched access network or indeed from a packet switched access network to another packet switched access network whilst reducing a delay in the handing over from a previous mobile access network to a target mobile access network. Embodiments of the present invention find particular although not exclusive application to mobile communications terminals which have only a single radio access interface active for communicating via either the previous or the target access networks at any one time. To this end, an internet protocol multimedia system which serves the mobile terminal as a calling terminal is arranged to anchor the communications session (referred to as a call anchoring function (CAF)). As such the mobile terminal registers with the internet protocol multimedia system (IMS) before placing a call. The registration includes authorisation, authentication and accounting, including for example service based policy functions and subscriber accounting.

When a call is placed by the mobile terminal to initiate a communications session by the mobile terminal requesting a bearer from an access network to which the mobile terminal is attached, a set up request message is forwarded by the access network to the IMS, which serves to set up the communications session establishing a bearer from the mobile terminal via the first mobile access network to a correspondent terminal. However, the IMS does not confirm the communications session with the mobile terminal until the mobile terminal changes affiliation from the first mobile access network to a second mobile access network. Once a handover is triggered from a first mobile access network to a second mobile access network, the IMS, which controls the communications session for the mobile terminal acting as a calling terminal, becomes a call control proxy between the mobile terminal acting as a calling terminal and the correspondent terminal acting as a called terminal. Thus, whilst the called terminal terminates the call for the calling terminal when the calling terminal communicates via the access network, the IMS acts as a termination for the call for the calling terminal once the calling terminal hands over to the second mobile access network. As a result, when the mobile terminal hands over from the first access network to the second access network there is no requirement to set up a call to the correspondent terminal acting as called terminal but the IMS merely needs to confirm with the mobile terminal acting as calling terminal that the bearer for continuing the communications session has been set up via the second mobile access network. As such, a time which had been required to deploy communications resources to set up quality of service bearers and administer the communications session to the correspondent node from the mobile terminal is not required and the IMS can merely confirm with the mobile terminal that the communications bearer has been established via the second mobile access network so that the communications session can continue with a minimum break in communications.

The present invention can be used to provide an improvement in a handover between a 3GPP or non-3GPP access networks and as indicated above a current mobile access network to which the mobile terminal is currently attached or a target mobile access network to which the mobile is to become attached may be either circuit switched or packet switched mobile access networks.

Embodiments of the present invention can provide an improvement in handing over between one mobile access network and another, because:
- An IMS operating in accordance with the present invention, acting as a call control proxy, does not need to set-up a communications bearer with the called party after handover has taken place.
- After the handover to the target access network, the calling party does not need to go through a complete IMS registration procedure, to set-up a communications bearer through the target access network.
- In addition, after handover to the target access network, the calling terminal does not need to go through a complete setup procedure from the beginning to establish a communications bearer as required by TS 23.228, but the call proxy function performed by the IMS operating in accordance with the present invention will simply send a confirmation message to the calling terminal as soon as the handover to the target access network is triggered.

Various further aspects and features of the present invention are defined in the appended claims.

### Brief Description of the Drawings

Embodiments of the present invention will now be described with reference to the accompanying drawings where like parts are identified with the same alphanumeric reference numerals and in which:
Figure 1 is a schematic block diagram of a telecommunications system including a first mobile access network, a second mobile access network and an IMS which is arranged to deploy multimedia services and act as a call anchoring function to a mobile terminal;
Figure 2 is a simplified block diagram of part of the telecommunications system which appears in Figure 1;
Figure 3 is an example message flow through which a communications session anchored in the IMS is set up from a circuit switched network shown in Figure 2;
Figure 4 is a message flow diagram illustrating an initiation of a call origination procedure from the IMS shown in Figure 1 and 2;
Figure 5 is a simplified flow diagram illustrating a handover procedure between a first mobile access network providing a circuit switched communications bearer and a second mobile access network providing a packet switched access bearer;
Figure 6 is an illustrative message flow of a procedure for an IMS anchoring a communications session terminated by a circuit switched network;
Figure 7 is an illustrative flow diagram of a handover procedure from an IMS to a circuit switched network; and
Figure 8 is a message flow diagram for a communications session terminated in a public switched telephone network.

### Description of Example Embodiments

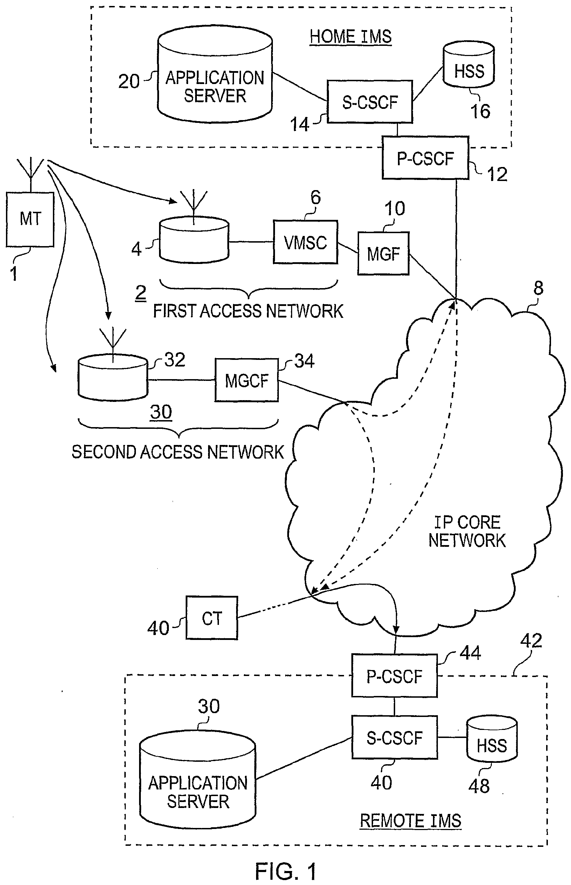

Figure 1 provides an illustrative representation of telecommunications system for explaining one example embodiment of the present invention. In Figure 1 a mobile terminal 1 is communicating via a first access network 2 which includes an access point 4 and a virtual mobile switching centre (VMSC) 6. To simplify the first access network 2 only a single access point 4 is shown to represent for example a base station, a base station switching centre or a node B and a radio network controller which would correspond to the GSM or the GPRS network architectures, respectively. As shown in Figure 1, the VMSC 6 is connected to an internet protocol (IP) network 8 via a MSC gateway function 10. Also connected to the IP network 8 is a proxy call state control function (P-CSCF) 12, a serving call state control- function (S-CSCF) 14, a home subscriber server 16 and an application server 20 which are connected to form a home internet protocol multimedia sub-system (IMS) illustrated by a broken line box 22. The home IMS system 22 therefore forms an IMS for triggering and deploying services to the mobile terminal 1.

Also shown in Figure 1 is a second mobile access network 30, which is comprised of an access point 32 and a media gateway control function 34. The second access network is also connected via the media gateway control function 34 to the IP network 8. Also shown connected to the IP call network 8 is a corresponding terminal 40. For the correspondent terminal 40 there is provided a second IMS network 42 which is comprised of a P-CSCF 44, an S-CSCF 46, and HSS 48 and an applications server 50 in correspondence with the architecture of the home IMS 22.

The telecommunications system shown in Figure 1 provides an illustrative example in which a mobile terminal 1 hands over from a first access network to a second mobile access network. Although in other examples the first mobile access network could be a packet switched network, the second access network could be a packet switched network or a circuit switched network, for the present explanation the first mobile access network is a circuit switched access network such as GSM/GPRS network and the second mobile access network is a packet switched (PS) access network for example operating in accordance with WiFi. Thus, according to the illustration shown in Figure 1, the mobile terminal performs a handover from the first mobile access network 2 to the second mobile access network 30 using only a single radio access interface. That is to say, only one radio access interface operates contemporaneously to communicate via the first access network and the second access network 2, 30.

As will be appreciated, the home IMS 22 is arranged to receive internet protocol packets via the call network 8, which are associated with signalling and are used for deploying multimedia services to the mobile terminal 1. Correspondingly, the corresponding terminal 40 has an IMS 42 which deploys services to the correspondent terminal 40 and therefore only receives signally IP packets from the call network. Bearers for communicating the IP packet in accordance with user data to effect the communications session are communicated via the first or second access networks via the IP call network to and from the correspondent node 40.

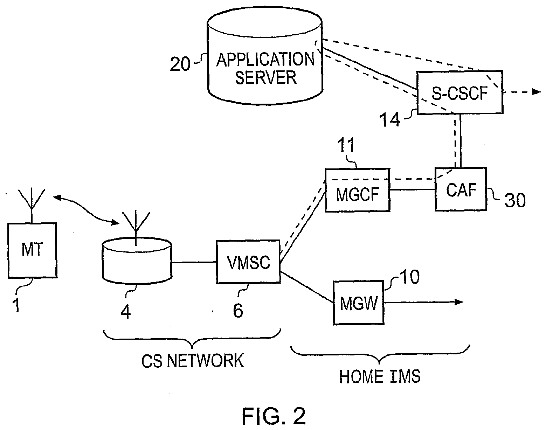

Figure 2 provides a more simplified representation of the separation between signalling IP data packets and traffic data packets. In Figure 2, the first mobile access network 2 forms a circuit switch network in that communications bearers are provided on a circuit switched basis. The first mobile access network is shown connected to the media gateway 10 and a media gateway control function 11, which does not appear in Figure 1 but appears in Figure 2 as an element which serves to separate the signalling data packets for forwarding to the home IMS 22. Part of the home IMS 22 is also shown in Figure 2. The application server 20 is shown connected to the S-CSCF 14 via a representations of a call anchoring function (CAF) 50. As illustrated in Figure 2 signalling IP packets are received from the VMSC 6 in the media gateway control function 11 for forwarding to the home IMS 22. In contrast traffic data packets are received at the media gateway 10 for forwarding to the correspondent node. Thus while the traffic data packets are forwarded via appropriate bearers to the correspondent terminal 40 signalling IP packets are forwarded from the IMS 22 to the remote IMS which serves the correspondent terminal 40.

In accordance with the present technique the home IMS 22 provides the call anchoring function (CAF) 50 which may form part of the PCSCF 12 or the SCSCF 14. The call anchoring function 50 is a function performed by the IMS to authorise and authenticate a mobile terminal 1 which has registered with the IMS for multimedia services. Thus, the call anchoring function serves to represent the registration of the mobile terminal with the IMS and for the authorisation, authentication and accounting of communications services are to be deployed to the mobile terminal 1.

Once the mobile terminal 1 attempts to set up a communications session with the correspondent terminal 40, then communications resources, quality of service provisions and serving policy functions are deployed using the IMS 22, which operates to set up appropriate communications bearers by the circuit switch network for communicating internet protocol (IP) data packets to the correspondent terminal 40. However, in accordance with the present technique because a call anchoring function (CAF) is provided in the IMS 22 of the mobile terminal 1, which receives an identifier of both the mobile terminal acting as a calling terminal and the correspondent terminal acting as a called terminal, the home IMS 22 can act to terminate a call when the mobile terminal hands over from the first mobile access network to the second mobile access network. Thus, even if the first mobile access network is a circuit switched network and the second mobile access network is a packet switched network an improvement in establishing a communications bearer via the second mobile access network is effected because the home IMS 22 acts as a call proxy. Therefore the home IMS 22 operates to terminate the call for the mobile terminal in that resources and quality of service provisioning is provided and arranged by the home IMS 22.

### The CAMEL based circuit switched Call Re-Routing to IMS CAF

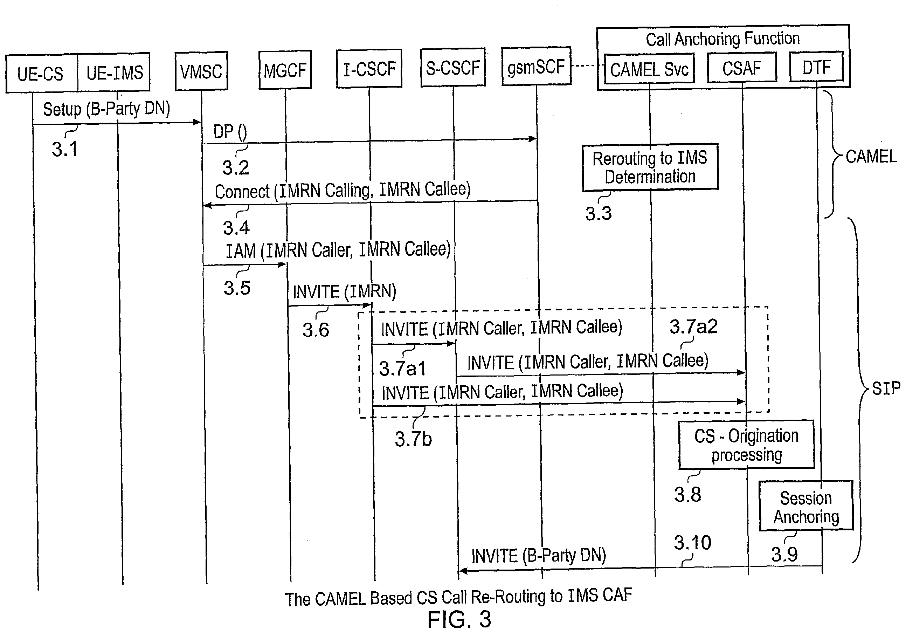

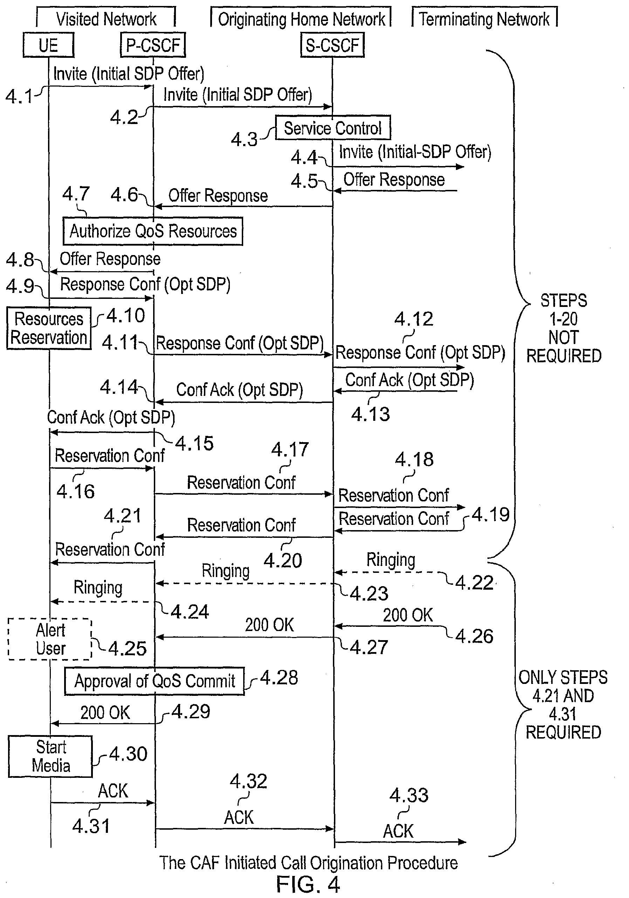

Figure 3 provides an illustrative example of a communications session set-up procedure via a first mobile access network providing circuit switched bearers. As illustrated in Figure 3 and explained in more detail below, the home IMS 22 performs a CAF provisioning communications resources and quality of service for the mobile terminal, so that the resources and quality of service can be merely confirmed after handover to the second mobile access network acting as a packet switched network. Therefore circuit switched originating calls are anchored at the CAF. The CAF in the home IMS 22 can therefore be set up as a third party call control to control the bearer path of the call. According to the present technique both the caller and the called terminal's number along with other information required to complete the call are stored in the CAF so that the CAF can originate the call to the mobile terminal (the caller itself when it is switched to the IMS domain) and the correspondent terminal on behalf the mobile terminal. This means that the CAF serves as a middle agent to mediate the call to BOTH the caller (the local party, the call origination) and the callee (the remote party, the call termination). As a result, rather than the IMS having to conduct a call set up with the correspondent terminal acting as the called terminal which would have required the steps 4.1 to 4.33 of the call flow shown in Figure 4, only steps 4.21 and 4.31 are required.

In Figure 3, the routing of a circuit switched call to the home IMS domain can be achieved by using CAMEL. The CAMEL origination triggers at the VMSC invokes signalling towards the gsmSCF, which then instructs the VMSC to route the call towards the IMS. Figure 3 is summarised as follows:
Steps 3.1 to 3.4 provide conventional CAMEL signalling to set-up a communications session with the circuit switched first access network, except in Step 3.4, the GSM Service Control Function (gsmSCF) responds with a CAP connect message containing the original calling and called terminal identifiers and the Source and Destination Routing Addresses. The Source and Destination Routing Addresses contain the IMRN (IP Multimedia Routing Number) of the local and the remote IMS domain so that the VMSC can use the IMRN to route the call to the CAF via the MGCF (see the next step).
3.5: The VMSC routes the call towards the user's home iMS network using the IMRN (IP Multimedia Routing Number) via an MGCF in the local (home) network.
3.6: The MGCF initiates an INVITE towards the I_CSCF in the home IMS of the call originator. The calling terminal number and/or original number are included in the INVITE when they are received from the PSTN call setup signalling (e.g. ISUP-ISDN User Part).
3.7: The I_CSCF routes the INVITE messages to the CAF either via the S-CSCF as indicated by the IMRN or directly to the CAF.
3.8: When the INVITE message is received by the CAF, the CAF retrieves the calling terminal number and the called terminal number . The CAF uses the called number to set up the outgoing calls to the called party (the remote IMS mobile terminal) as defined in clause 5.6.5 of TS23.228. However, the CAF holds the call setup initiation to the calling party (the circuit switched call originator) until the handover to the PS domain is triggered and the US connects to the PS domain.
3.9: Once the mobile terminal connects to the PS domain, the CAF initiates the IMS session set-up to the calling terminal as defined in clauses 5.6.5 of TS23.228.
3.10: The calling terminal UE receives the INVITE message originated by the CAF as if the IMS session request comes from the remote called party.

### The CAF Initiated Call Origination Procedure

In order to illustrate a saving in time and complexity for performing a hand over, which is provide by the present technique, Figure 4 presents a message sequence flow, which would be required in order to set-up a communications session between the mobile terminal and the correspondent terminal once the mobile terminal has roamed to the target mobile access network, without utilising the present technique. However, as indicated above, as a result of the CAF in the IMS as set-up for the example of Figure 3, only messages 4.21 and 4.31 are required. As a result a significant saving can be made in both time and complexity for a mobile terminal handing over from one mobile access network to a second mobile access network. The message flow illustrated in Figure 4 is described in more detail as follows:
4.1: The mobile terminal sends the SIP INVITE request, containing an initial SDP, to the P-CSCF determined via the CSCF discovery mechanism. The initial SDP may represent one or more media for a multi-media session.
4.2: The Authorization-Token is generated at this step and stored in the P-CSCF. P-CSCF remembers (from the registration procedure) the next hop CSCF for this mobile terminal.

This next hop is either the S-CSCF that is serving the visiting mobile terminal.
4.3: S-CSCF validates the service profile, and invokes any origination service logic required for this user. This includes authorisation of the requested SDP based on the user's subscription for multi-media services.
4.4: S-CSCF forwards the request, as specified by the S-S procedures.
4.5: The media stream capabilities of the destination are returned along the signalling path, per the S-S procedures.
4.6: S-CSCF forwards the Offer Response message to P-CSCF.
4.7: P-CSCF authorises the resources necessary for this session.
4.8: The Authorization-Token is included in the Offer Response message. P-CSCF forwards the message to the originating endpoint
4.9: mobile terminal decides the offered set of media streams for this session, confirms receipt of the Offer Response and sends the Response Confirmation to the P-CSCF. The Response Confirmation may also contain SDP. This may be the same SDP as in the Offer Response received in Step 8 or a subset. If new media are defined by this SDP, a new authorization (as in Step 7) will be done by the P-CSCF(PDF) following Step 14. The originating mobile terminal is free to continue to offer new media on this operation or on subsequent exchanges using the Update method. Each offer/answer exchange will cause the P-CSCF(PDF) to repeat the Authorization step (Step 7) again.
4.10: After determining the needed resources in step 8, mobile terminal initiates the reservation procedures for the resources needed for this session.
4.11: P-CSCF forwards the Response Confirmation to S-CSCF.
4.12: S-CSCF forwards this message to the terminating endpoint, as per the S-S procedure.
4.13-15: The terminating end point responds to the originating end with an acknowledgement. If Optional SDP is contained in the Response Confirmation, the Confirmation Acknowledge will also contain an SDP response. If the SDP has changed, the P-CSCF validates that the resources are allowed to be used.
4.16-18: When the resource reservation is completed, mobile terminal sends the successful Resource Reservation message to the terminating endpoint, via the signalling path established by the INVITE message. The message is sent first to P-CSCF.
4.19-21: The terminating end point responds to the originating end when successful resource reservation has occurred. If the SDP has changed, the P-CSCF authorizes that the resources are allowed to be used.
4.22-24: Terminating end point may generate ringing and it is then forwarded via the session path to the mobile terminal.
4.25: The mobile terminal indicates to the originating user that the destination is ringing
4.26: When the destination party answers, the terminating endpoint sends a SIP 200-OK final response, as specified by the termination procedures and the S-S procedures, to S-CSCF.
4.27: S-CSCF sends a SIP 200-OK final response along the signalling path back to P-CSCF.
4.28: P-CSCF indicates the resources reserved for this session should now be approved for use.
4.29: P-CSCF sends a SIP 200-OK final response to the session originator
4.30: The mobile terminal starts the media flow(s) for this session
4.31-33: The mobile terminal responds to the 200 OK with a SIP ACK message sent along the signalling path.

### Handover Procedures: circuit switched domain to the PS Domain

To minimize the handover gap, the IMS AF-CAF function can prepare the control necessary to complete the call set-up prior to or during the mobile terminal's handover from the circuit switched to the PS domain. This control can include policy control (setting up the policy information associated with this call and the policy enforcement functions such as the packet filtering) and QoS/resource reservation, etc.

The triggering of the CAF initiated Call Setup to the Calling Party can be from the PS domain which handles the HO as the target domain. For example, a handover indication to the PS domain can be used as a trigger to the CAF to initiate the call set-up process.

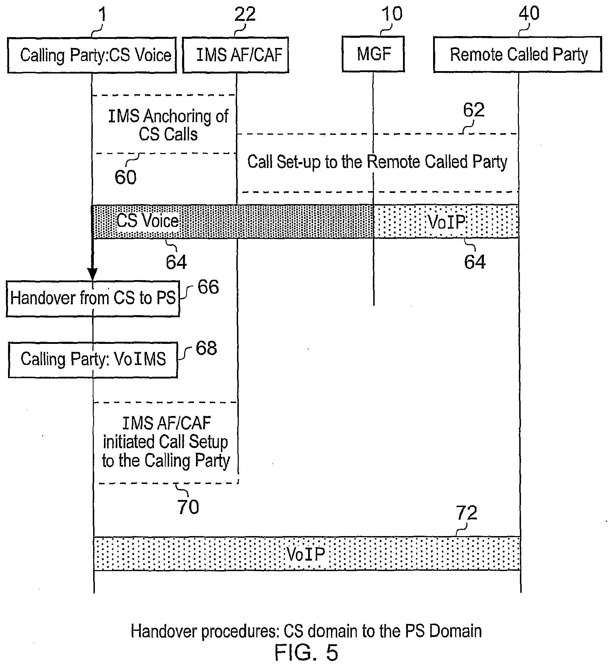

In summary, the operation of a handover procedure from the circuit switched domain to the packet switched domain is presented in Figure 5. In Figure 5 the mobile terminal 1 acting as a calling party establishes a circuit switch voice communications channel via the first mobile access network. However, in accordance with the present technique illustrated by the example of Figure 3, the communications session in accordance with the circuit switched voice communication with the remote terminal is anchored in the home IMS 22 which is represented generally by box 60. Thus, call set up procedures and messaging is established between the first mobile access network and the IMS 22. As a result, following messages exchanged with the correspondent terminal represented by a box 62, the communications session is set up with the correspondent terminal 40 acting as a called party using the media gateway control function (MGCF) 10. Thus, as illustrated by boxes 64 and 66, the mobile terminal, communicates circuit switched voice via the first access network and the media gateway function 10, and voice over IP 64 from the media gateway function 10 to the remote correspondent terminal. Box 66 represents the handover between the circuit switched first mobile access network and the packet switched second mobile access network. The handover could be triggered at the radio level in accordance with a reduction in signal quality for example or at the network level as a result of a PDP context activation request being received by the second mobile access network or from the IMS itself which detects some other parameter and a result of which provisions a bearer on the second package switched network for continuing the communications session with the correspondent terminal. Thus, at box 68 the mobile terminal switches to voice over IP and the calling party acts as a voice IMS session. As a result in box 70 the IMS anchor function or call anchor function initiates a call set up to the calling party, that is the IMS call anchor function acts to terminate a call by calling the calling party. In effect as illustrated in Figure 4 this represents a reservation confirmation message to the mobile terminal and an acknowledgement from the mobile terminal thus omitting steps associated with establishing a call with the called party or correspondent terminal 40. As illustrated by box 72 communicates thereafter between the mobile terminal 1 and the correspondent terminal 40 are conducted as voice over IP.

### IMS Anchoring of circuit switched Terminated Call

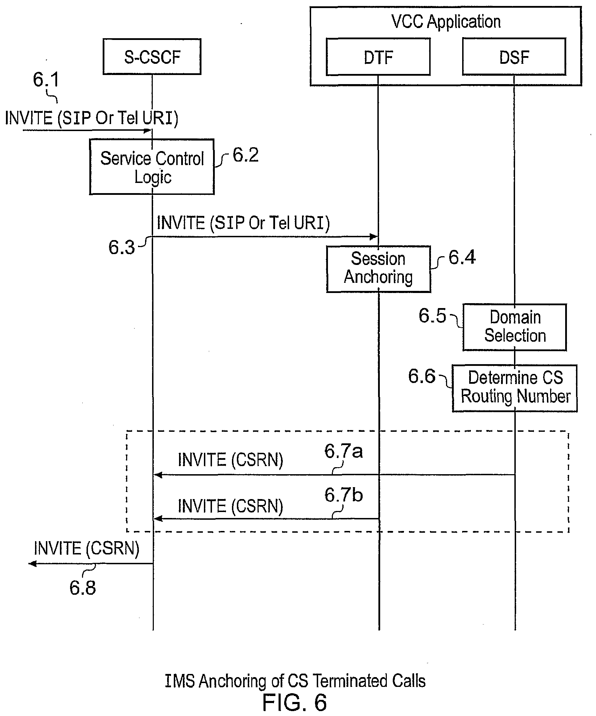

Figure 6 provides an illustrative example of a message flow, which selects the circuit switched domain to terminate an incoming call. This re-uses Voice Call Continuity (VCC), which is defined in TS23.206 (Terminated Call Directed to the circuit switched (Section 6.3.3)). The message flow is summarised as follows:
6.1: An INVITE arrives at the S-CSCF including a request URI in Tel URI or SIP URI format.
6.2: S-CSCF invokes necessary service logic as appropriate.
6.3: S-CSCF forwards the initial INVITE to the IMS AF/CAF over the ISC interface.
6.4: CAF anchors the call depending on operator policy.
6.5: Based on the domain selection criteria, the CAF selects the circuit switched domain for call routing
6.6: The CAF determines the circuit switched domain routing number (CSRN: CS domain Routing Number),
6.7: The CAF sends an INVITE including the circuit switched domain routing number as request URI toward the S-CSCF. The INVITE including the CSRN contains sufficient information to allow the S-CSCF to determine that the session is to be routed to the circuit switched domain.
6.8: S-CSCF routes the INVITE toward the circuit switched domain according TS 23.228 [2].

### Handover from PS Domain to the circuit switched Domain

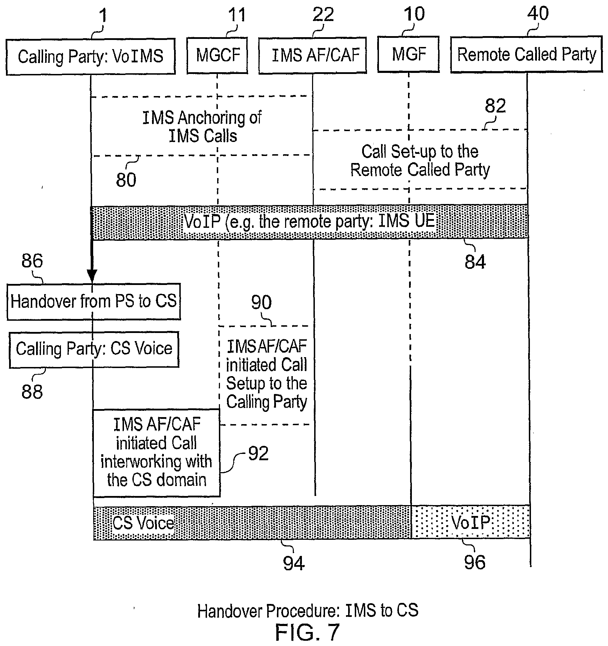

If the mobile terminal is communicating via a packet switched network which is controlled by the IMS and hands over to a mobile access network which is providing circuit switched bearers then a procedure is followed which is illustrated by the flow diagram of Figure 7. As illustrated in Figure 7 if the mobile terminal is communicating via a packet switched network then the communications sessions is automatically anchored in the IMS because signalling IP packets will be intercepted by the IMS for deploying for example a voice over IP service. Thus a SIP message exchange represented by box 80 will set up a call with a remote terminal 40 which will communicate correspondent IP packets to the remote IMS as represented by box 82. Thus, as illustrated by the traffic illustration box 84 communication of data will be via voice over IP. In an event represented by box 86 of the mobile terminal handing over from the packet switched mobile access network to a circuit switched access network then the mobile terminal acting as calling party will switch to circuit switched voice represented by box 88. As such the IMS which will be triggered, will initiate a call set up procedure to the calling party, that is the mobile terminal, as represented by box 90. Since the IMS is setting up a call to the mobile terminal via a circuit switched network then an inter-working function effected by the media gateway control function 11 will initiate the call with the circuit switched mobile access network as illustrated by box 92. Thus, as illustrated by the traffic type boxes 94, 96, the mobile terminal acting as the calling terminal will be conducted circuit switched voice communications to the media gateway 10 after which conversion will take place and the circuit switched voice will be switched to the voice over IP.

### PSTN Termination Procedure

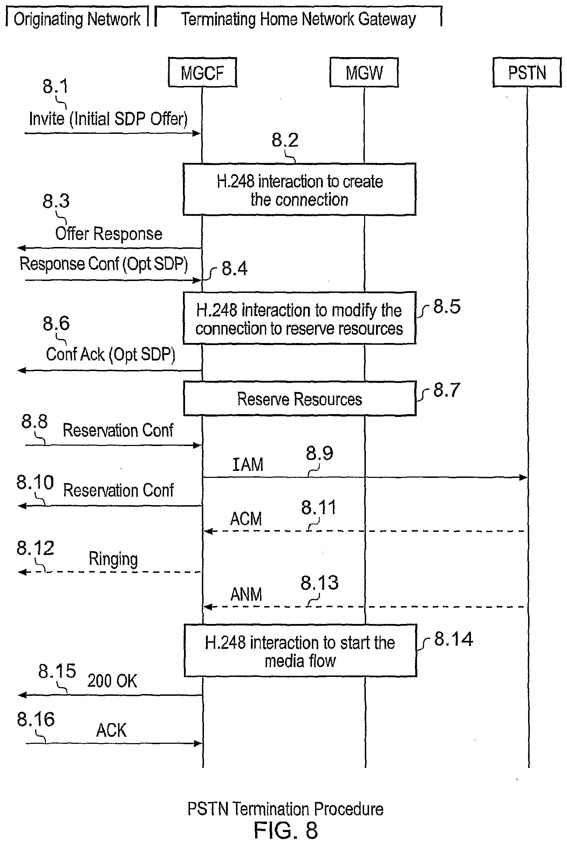

For completeness an example message flow illustrating a process for setting-up a communications session with a correspondent terminal attached to a public switched telephone network (PSTN) is shown in Figure 8, which follows section 5.7.3 of TS 23.228.

As will be appreciated from the above description, embodiments of the present invention can provide:
- The call control is anchored in IMS (at IMS CAF)
- Handover achieved by switching (setting up, call transfer, and releasing) between the circuit switched connection and IMS Session
- Mobile originated circuit switched Calls are "forced" to be anchored in IMS
- IMS AF (the Call Anchor Function, CAF) serves as a circuit switched Call Proxy that for the circuit switched originated calls
- The CAF stores the necessary data for the circuit switched originated calls
- For HO from circuit switched to PS/non-3GPP domain, the CAF initiates a IMS session set-up to the call originator which is now in the PS domain, as if it is the call terminator. (i.e. the circuit switched originated call is treated by the CAF as the called to set up the IMS session when the handover is from circuit switched domain to the IMS domain).

Embodiments of the present invention can reduce a time for the IMS session set-up when the call is switched to the PS domain. This is because for a handover from PS/non-3GPP domain to circuit switched, the CAF serves as the circuit switched call proxy as if the circuit switched call is initiated by the CAF, i.e. the CAF initiates a circuit switched call set-up (via inter-working with the circuit switched call control) to the circuit switched domain when the call is switched over from the PS domain to the circuit switched domain.

Embodiments of the present invention can also reduce a time for the circuit switched call set-up when the call is switched to the circuit switched domain. This is because the CAF can decide if the mobile terminal is allowed to perform the handover before the handover takes place, depending on the resource/network load conditions/ or other operator policies. This will minimize the possibility of service interruption.

Various aspects and features of the present invention are defined in the appended claims. Furthermore, various modifications may be made to the embodiments described above without departing from the scope of the present invention as defined by the claims. For example, although GSM and 3G/GPRS has been used to illustrate a circuit switched voice communications system, various other circuit switched communications networks could be used such as CDMA, GSM or indeed a PSTN call. On the other hand various packet switched networks could be used other than WiFi and WiMax and dependant on the application layer a GPRS access network could also be used.

## Claims

1. A method of providing an internet protocol communications service to a mobile terminal (1), comprising the acts of:
registering the mobile terminal (1) with an Internet Protocol Multimedia Sub-system, IMS, for deploying multi-media communications sessions to the mobile terminal (1) via a first mobile access network (2) and a second mobile access network (30), the registration including authentication and authorisation of the mobile terminal (1),
communicating a set-up request message from the mobile terminal (1) acting as a calling terminal for requesting a bearer channel via said first mobile access network (2) for communicating user data to and from a correspondent terminal (40) acting as a called terminal to support a communications session with the correspondent terminal (40),
communicating a session set-up message to said internet protocol multimedia sub-system from the first mobile access network (2), the session set-up message including an identifier of the mobile terminal (1) and an identifier of the correspondent terminal (40),
initiating the communications session between the mobile terminal (1) and the correspondent terminal (40) leaving the communications session unconfirmed with the mobile terminal (1), and
consequent upon the mobile terminal (1) roaming from the first mobile access network (2) to the second mobile access network (30) and requesting a communications bearer via the second mobile access network (30) for continuing the communications session via the second mobile access network (30),
establishing by the internet protocol multimedia sub-system the communications bearer via the second mobile access network (30),
initiating by the internet protocol multimedia sub-system a session set up with the mobile terminal (1) by acting as a termination for the communication session with the mobile terminal (1), comprising the step of communicating by the internet protocol multimedia sub-system a confirmation message to the mobile terminal (1) via the second mobile access network (30) to confirm that the communication session has been established to the mobile terminal (1), to provide the communications bearer via the second mobile access network (30) for continuing the communications session with the mobile terminal (1) via the second mobile access network (30),
wherein the method further comprises the act of:
establishing by the internet protocol multimedia sub-system the communications bearer via the second mobile access network (30), in response to at least one of a trigger from a radio communications layer of the second mobile access network (30), a trigger from a network communications layer of the mobile access, or in response to a session initiation message received by the internet protocol multimedia sub-system from the second mobile access network (30).

2. A method according to claim 1, wherein the trigger from the network communications layer includes a receipt of a packet data protocol context application request message.

3. A method according to claim 2, wherein the packet data protocol context application request message is a request for a communications bearer for continuing the communications session with the correspondent terminal (40) via the second mobile access network (30), the second mobile access network (30) being operable to communicate the request to the internet protocol multimedia sub-system, the internet protocol multimedia sub-system is operable
to communicate signalling data to the mobile terminal (1) via the second mobile access network (30), to initiate a communications session with the mobile terminal (1) via the second mobile access network (30) to establish the bearer via the second mobile access network (30) and to arrange for the communications session to be continued via the bearer of the second mobile access network (30) with the correspondent terminal (40).

4. A method according to any preceding claim, wherein the communications session includes the communication of user data representative of voice communications between the mobile terminal (1) and the correspondent terminal (40), the communications bearers established by at least one of the first mobile access network (2) and the second mobile access network (30) being via internet protocol packets.

5. A method according to any preceding claim, wherein the mobile terminal (1) is arranged to have only one access interface for communicating via either the first or the second mobile access interfaces active at any time.

6. A computer program product which when loaded into a computer performs the method according to any of the claims 1 to 5.

7. A carrying medium on which is recorded a computer program product according to Claim 6.

8. An Internet protocol Multimedia sub-System, IMS, for deploying internet protocol multi-media services to communications terminals, the internet protocol multimedia sub-system being operable
to register a mobile terminal (1) for deploying multi-media communications sessions to the mobile terminal (1) via a first mobile access network (2) and a second mobile access network (30), the registration including authentication and authorisation of the mobile terminal (1), the mobile terminal (1) being operable as a calling terminal to communicate a set-up request message for requesting a bearer channel via said first mobile access network (2) for communicating user data to and from a correspondent terminal (40) acting as a called terminal to support a communications session with the correspondent terminal (40), the first mobile access network (2) being operable to communicate a session set-up message to the internet protocol multimedia sub-system, the session set-up message including an identifier of the mobile terminal (1) and an identifier of the correspondent terminal (40), the internet protocol multimedia sub-system being operable
to initiate the communications session between the mobile terminal (1) and the correspondent terminal leaving the communications session unconfirmed with the mobile terminal (1), and
consequent upon the mobile terminal (1) roaming from the first mobile access network (2) to the second mobile access network (30) and requesting a communications bearer via the second mobile access network (30) for continuing the communications session via the second mobile access network (30),
to establish the communications bearer via the second mobile access network (30),
to initiate a session set up with the mobile terminal (1) and act as termination for the communication session with the mobile terminal (1), comprising
to communicate a confirmation message to the mobile terminal (1) via the second mobile access network (30) confirming that the communication session has been established to the mobile terminal (1), to provide the communications bearer via the second mobile access network (30) for continuing the communications session with the mobile terminal (1) via the second mobile access network (30),
and wherein the internet protocol multi-media sub-system is further operable to establish the communications bearer via the second mobile access network (30), in response to at least one of a trigger from a radio communications layer of the second mobile access network (30), a trigger from a network communications layer of the mobile access, or in response to a session initiation message received by the internet protocol multimedia sub-system from the second mobile access network (30).

9. An internet protocol multimedia sub-system according to claim 8, wherein the trigger from the network communications layer includes a receipt of a packet data protocol context application request message.

10. An Internet protocol Multimedia sub-System according to claim 8 or 9, wherein the packet data protocol context application request message is a request for a communications bearer for continuing the communications session with the correspondent terminal (40) via the second mobile access network (30), the second mobile access network (30) being operable to communicate the request to the internet protocol multimedia sub-system, the internet protocol multimedia sub-system is operable
to communicate signalling data to the mobile terminal (1) via the second mobile access network (30), to initiate a communications session with the mobile terminal (1) via the second mobile access network (30) to establish the bearer via the second mobile access network (30) and to arrange for the communications session to be continued via the bearer of the second mobile access network (30) with the correspondent terminal (40).

11. An Internet protocol Multimedia sub-System according to claim 10, wherein the communications session includes the communication of user data representative of voice communications between the mobile terminal (1) and the correspondent terminal (40), the communications bearers established by at least one of the first mobile access network (2) and the second mobile access network (30) being via internet protocol packets.

12. An Internet protocol Multimedia sub-System according to any claim 8 to 11, wherein the mobile terminal (1) is arranged to have only one access interface for communicating via either the first or the second mobile access interfaces active at any time.

## Patentansprüche

1. Verfahren eines Bereitstellens eines Internetprotokollkommunikationsdienstes an ein Mobilendgerät (1), umfassend die Schritte:
Registrieren des Mobilendgeräts (1) mit einem Internetprotokoll-Multimediasubsystem, IMS, zum Ausliefern von Multimedia-Kommunikationssitzungen an das Mobilendgerät (1) über ein erstes Mobilzugriffnetzwerk (2) und ein zweites Mobilzugriffsnetzwerk (30), wobei die Registrierung Authentifizierung und Autorisierung des Mobilendgeräts (1) einschließt,
Kommunizieren einer Setup-Anforderungsnachricht von dem Mobilendgerät (1), das als ein anrufendes Endgerät zum Anfordern eines Trägerkanals über das erste Mobilzugriffsnetzwerk (2) handelt, zum Kommunizieren von Benutzerdaten an ein und von einem Korrespondenzendgerät (40), das als ein angerufenes Endgerät handelt, um eine Kommunikationssitzung mit dem Korrespondenzendgerät (40) zu unterstützen,
Kommunizieren einer Sitzungssetupnachricht an das Internetprotokoll-Multimediasubsystem von dem ersten Mobilzugriffsnetzwerk (2), wobei die Sitzungssetupnachricht einen Identifizierer des Mobilendgeräts (1) und einen Identifizierer des Korrespondenzendgeräts (40) einschließt,
Initiieren der Kommunikationssitzung zwischen dem Mobilendgerät (1) und dem Korrespondenzendgerät (40), das die Kommunikationssitzung mit dem Mobilendgerät (1) unbestätigt lässt,
nachfolgend darauf, dass das Mobilendgerät (1) im Roaming von dem ersten Mobilzugriffsnetzwerk (2) zu dem zweiten Mobilzugriffsnetzwerk (30) übergeht und einen Kommunikationsträger über das zweite Mobilzugriffsnetzwerk (30) zum Fortsetzen der Kommunikationssitzung über das zweite Mobilzugriffsnetzwerk (30) anfordert,
Errichten des Kommunikationsträgers durch das Internetprotokoll-Multimediasubsystem über das zweite Mobilzugriffsnetzwerk (30),
Initiieren eines Sitzungssetups durch das Internetprotokoll-Multimediasubsystem mit dem Mobilendgerät (1) durch Handeln als eine Terminierung für die Kommunikationssitzung mit dem Mobilendgerät (1), umfassend den Schritt eines Kommunizierens einer Bestätigungsnachricht durch das Internetprotokoll-Multimediasubsystem an das Mobilendgerät (1) über das zweite Mobilzugriffsnetzwerk (30), um an das Mobilendgerät (1) zu bestätigen, dass die Kommunikationssitzung errichtet worden ist, um den Kommunikationsträger über das zweite Mobilzugriffsnetzwerk (30) zum Fortsetzen der Kommunikationssitzung mit dem Mobilendgerät (1) über das zweite Mobilzugriffsnetzwerk (30) bereitzustellen,
wobei das Verfahren weiter umfasst:
Errichten des Kommunikationsträgers über das zweite Mobilzugriffsnetzwerk (30) durch das Internetprotokoll-Multimediasubsystem in Antwort auf mindestens eines von einem Auslöser von einer Funkkommunikationsschicht des zweiten Mobilzugriffsnetzwerks (30), einem Auslöser von einer Netzwerkkommunikationsschicht des Mobilzugriffs oder in Antwort auf eine durch das Internetprotokoll-Multimediasubsystem von dem zweiten Mobilzugriffsnetzwerk (30) empfangene Sitzungsinitiierungsnachricht.

2. Verfahren nach Anspruch 1, wobei der Auslöser von der Netzwerkkommunikationsschicht einen Empfang einer Paketdatenprotokollkontextanwendungsanforderungsnachricht einschließt.

3. Verfahren nach Anspruch 2, wobei die Paketdatenprotokollkontextanwendungsanforderungsnachricht eine Anforderung für einen Kommunikationsträger zum Fortsetzen der Kommunikationssitzung mit dem Korrespondenzendgerät (40) über das zweite Mobilzugriffsnetzwerk (30) ist, wobei das zweite Mobilzugriffsnetzwerk (30) dafür betreibbar ist, die Anforderung an das Internetprotokoll-Multimediasubsystem zu kommunizieren, wobei das Internetprotokoll-Multimediasubsystem dafür betreibbar ist
Signalisationsdaten an das Mobilendgerät (1) über das zweite Mobilzugriffsnetzwerk (30) zu kommunizieren, eine Kommunikationssitzung mit dem Mobilendgerät (1) über das zweite Mobilzugriffsnetzwerk (30) zu initiieren, um den Träger über das zweite Mobilzugriffsnetzwerk (30) zu errichten, und zu ermöglichen, dass die Kommunikationssitzung über den Träger des zweiten Mobilzugriffsnetzwerk (30) mit dem Korrespondenzendgerät (40) fortgesetzt wird.

4. Verfahren nach einem der vorstehenden Ansprüche, wobei die Kommunikationssitzung die Kommunikation von Benutzerdaten, die für Sprachkommunikation zwischen dem Mobilendgerät (1) und dem Korrespondenzendgerät (40) repräsentativ sind, einschließt, wobei die durch mindestens eines von dem ersten Mobilzugriffsnetzwerk (2) und dem zweiten Mobilzugriffsnetzwerk (30) errichteten Kommunikationsträger über Internetprotokollpakete verlaufen.

5. Verfahren nach einem der vorstehenden Ansprüche, wobei das Mobilendgerät (1) dafür angeordnet ist, zu jeder Zeit nur genau eine Zugriffsschnittstelle zum Kommunizieren über entweder die ersten oder die zweiten Mobilzugriffsschnittstellen aktiv zu haben.

6. Computerprogrammprodukt, das, wenn es in einen Computer geladen ist, das Verfahren nach einem der Ansprüche 1 bis 5 durchführt.

7. Trägermedium, auf dem ein Computerprogrammprodukt nach Anspruch 6 aufgezeichnet ist.

8. Internetprotokoll-Multimediasubsystem, IMS, zum Ausliefern von Internetprotokoll-Multimediadiensten an Kommunikationsendgeräte, wobei das Internetprotokoll-Multimediasubsystem dafür betreibbar ist,
ein Mobilendgerät (1) zum Ausliefern von Multimedia-Kommunikationssitzungen an das Mobilendgerät (1) über ein erstes Mobilzugriffnetzwerk (2) und ein zweites Mobilzugriffsnetzwerk (30) zu registrieren, wobei die Registrierung Authentifizierung und Autorisierung des Mobilendgeräts (1) einschließt, wobei das Mobilendgerät (1) als ein anrufendes Endgerät betreibbar ist, um eine Setup-Anforderungsnachricht zum Anfordern eines Trägerkanals über das erste Mobilzugriffsnetzwerk (2) zu kommunizieren, zum Kommunizieren von Benutzerdaten an ein und von einem Korrespondenzendgerät (40), das als ein angerufenes Endgerät handelt, um eine Kommunikationssitzung mit dem Korrespondenzendgerät (40) zu unterstützen, wobei das erste Mobilzugriffsnetzwerk (2) dafür betreibbar ist, eine Sitzungssetupnachricht an das Internetprotokoll-Multimediasubsystem zu kommunizieren, wobei die Sitzungssetupnachricht einen Identifizierer des Mobilendgeräts (1) und einen Identifizierer des Korrespondenzendgeräts (40) einschließt, wobei das Internetprotokoll-Multimediasubsystem dafür betreibbar ist,
die Kommunikationssitzung zwischen dem Mobilendgerät (1) und dem Korrespondenzendgerät zu initiieren, das die Kommunikationssitzung mit dem Mobilendgerät (1) unbestätigt lässt, und
nachfolgend darauf, dass das Mobilendgerät (1) im Roaming von dem ersten Mobilzugriffsnetzwerk (2) zu dem zweiten Mobilzugriffsnetzwerk (30) übergeht und einen Kommunikationsträger über das zweite Mobilzugriffsnetzwerk (30) zum Fortsetzen der Kommunikationssitzung über das zweite Mobilzugriffsnetzwerk (30) anfordert,
den Kommunikationsträger über das zweite Mobilzugriffsnetzwerk (30) zu errichten,
ein Sitzungssetup mit dem Mobilendgerät (1) zu initiieren und als Terminierung für die Kommunikationssitzung mit dem Mobilendgerät (1) zu handeln, umfassend
eine Bestätigungsnachricht an das Mobilendgerät (1) über das zweite Mobilzugriffsnetzwerk (30) zu kommunizieren, die an das Mobilendgerät (1) bestätigt, dass die Kommunikationssitzung errichtet worden ist, um den Kommunikationsträger über das zweite Mobilzugriffsnetzwerk (30) zum Fortsetzen der Kommunikationssitzung mit dem Mobilendgerät (1) über das zweite Mobilzugriffsnetzwerk (30) bereitzustellen,
und wobei das Internetprotokoll-Multimediasubsystem weiter dafür betreibbar ist, den Kommunikationsträger über das zweite Mobilzugriffsnetzwerk (30) in Antwort auf mindestens eines von einem Auslöser von einer Funkkommunikationsschicht des zweiten Mobilzugriffsnetzwerks (30), einem Auslöser von einer Netzwerkkommunikationsschicht des Mobilzugriffs oder in Antwort auf eine durch das Internetprotokoll-Multimediasubsystem von dem zweiten Mobilzugriffsnetzwerk (30) empfangene Sitzungsinitiierungsnachricht zu errichten.

9. Internetprotokoll-Multimediasubsystem nach Anspruch 8, wobei der Auslöser von der Netzwerkkommunikationsschicht einen Empfang einer Paketdatenprotokollkontextanwendungsanforderungsnachricht einschließt.

10. Internetprotokoll-Multimediasubsystem nach Anspruch 8 oder 9, wobei die Paketdatenprotokollkontextanwendungsanforderungsnachricht eine Anforderung für einen Kommunikationsträger zum Fortsetzen der Kommunikationssitzung mit dem Korrespondenzendgerät (40) über das zweite Mobilzugriffsnetzwerk (30) ist, wobei das zweite Mobilzugriffsnetzwerk (30) dafür betreibbar ist, die Anforderung an das Internetprotokoll-Multimediasubsystem zu kommunizieren, wobei das Internetprotokoll-Multimediasubsystem dafür betreibbar ist
Signalisationsdaten an das Mobilendgerät (1) über das zweite Mobilzugriffsnetzwerk (30) zu kommunizieren, eine Kommunikationssitzung mit dem Mobilendgerät (1) über das zweite Mobilzugriffsnetzwerk (30) zu initiieren, um den Träger über das zweite Mobilzugriffsnetzwerk (30) zu errichten, und zu ermöglichen, dass die Kommunikationssitzung über den Träger des zweiten Mobilzugriffsnetzwerk (30) mit dem Korrespondenzendgerät (40) fortgesetzt wird.

11. Internetprotokoll-Multimediasubsystem nach Anspruch 10, wobei die Kommunikationssitzung die Kommunikation von Benutzerdaten, die für Sprachkommunikation zwischen dem Mobilendgerät (1) und dem Korrespondenzendgerät (40) repräsentativ sind, einschließt, wobei die durch mindestens eines von dem ersten Mobilzugriffsnetzwerk (2) und dem zweiten Mobilzugriffsnetzwerk (30) errichteten Kommunikationsträger über Internetprotokollpakete verlaufen.

12. Internetprotokoll-Multimediasubsystem nach einem der Ansprüche 8 bis 11, wobei das Mobilendgerät (1) dafür angeordnet ist, zu jeder Zeit nur genau eine Zugriffsschnittstelle zum Kommunizieren über entweder die ersten oder die zweiten Mobilzugriffsschnittstellen aktiv zu haben.

## Revendications

1. Procédé de fourniture d'un service de communications de protocole Internet à un terminal mobile (1), comprenant les actes :
d'enregistrement du terminal mobile (1) auprès d'un sous-système multimédia de protocole Internet, IMS, pour déployer des sessions de communications multimédias vers le terminal mobile (1) via un premier réseau d'accès mobile (2) et un second réseau d'accès mobile (30), l'enregistrement incluant une authentification et une autorisation du terminal mobile (1),
de communication d'un message de demande de mise en place depuis le terminal mobile (1) servant de terminal appelant pour demander une voie porteuse via ledit premier réseau d'accès mobile (2) pour communiquer des données d'utilisateur à et depuis un terminal correspondant (40) servant de terminal appelé pour prendre en charge une session de communications avec le terminal correspondant (40),
de communication d'un message de mise en place de session audit sous-système multimédia de protocole Internet depuis le premier réseau d'accès mobile (2), le message de mise en place de session incluant un identifiant du terminal mobile (1) et un identifiant du terminal correspondant (40),
de lancement de la session de communications entre le terminal mobile (1) et le terminal correspondant (40) laissant la session de communications non confirmée auprès du terminal mobile (1), et
suite à l'itinérance du terminal mobile (1) du premier réseau d'accès mobile (2) au second réseau d'accès mobile (30) et la demande d'une porteuse de communications via le second réseau d'accès mobile (30) pour poursuivre la session de communications via le second réseau d'accès mobile (30),
d'établissement par le sous-système multimédia de protocole Internet de la porteuse de communications via le second réseau d'accès mobile (30),
de lancement par le sous-système multimédia de protocole Internet d'une mise en place de session avec le terminal mobile (1) en servant de terminaison pour la session de communications avec le terminal mobile (1), comprenant l'étape de communication par le sous-système multimédia de protocole Internet d'un message de confirmation au terminal mobile (1) via le second réseau d'accès mobile (30) pour confirmer que la session de communications a été établie avec le terminal mobile (1), pour fournir la porteuse de communications via le second réseau d'accès mobile (30) pour poursuivre la session de communications avec le terminal mobile (1) via le second réseau d'accès mobile (30),
dans lequel le procédé comprend en outre l'acte :
d'établissement par le sous-système multimédia de protocole Internet de la porteuse de communications via le second réseau d'accès mobile (30), en réponse à au moins l'un d'un déclenchement depuis une couche de radiocommunications du second réseau d'accès mobile (30), d'un déclenchement depuis une couche de communications réseau de l'accès mobile, ou en réponse à un message de lancement de session reçu par le sous-système multimédia de protocole Internet depuis le second réseau d'accès mobile (30).

2. Procédé selon la revendication 1, dans lequel le déclenchement depuis la couche de communications réseau comporte une réception d'un message de demande d'application de contexte de protocole de données par paquet.

3. Procédé selon la revendication 2, dans lequel le message de demande d'application de contexte de protocole de données par paquet est une demande pour qu'une porteuse de communications poursuive la session de communications avec le terminal correspondant (40) via le second réseau d'accès mobile (30), le second réseau d'accès mobile (30) étant opérationnel pour communiquer la demande au sous-système multimédia de protocole Internet, le sous-système multimédia de protocole Internet est opérationnel
pour communiquer des données de signalisation au terminal mobile (1) via le second réseau d'accès mobile (30), pour lancer une session de communications avec le terminal mobile (1) via le second réseau d'accès mobile (30) pour établir la porteuse via le second réseau d'accès mobile (30) et pour arranger que la session de communications se poursuive via la porteuse du second réseau d'accès mobile (30) avec le terminal correspondant (40).

4. Procédé selon l'une quelconque des revendications précédentes, dans lequel la session de communications inclut la communication de données d'utilisateur représentatives de communications vocales entre le terminal mobile (1) et le terminal correspondant (40), les porteuses de communications établies par au moins l'un du premier réseau d'accès mobile (2) et du second réseau d'accès mobile (30) étant via des paquets de protocole Internet.

5. Procédé selon l'une quelconque des revendications précédentes, dans lequel le terminal mobile (1) est agencé pour avoir uniquement une interface d'accès pour communiquer via la première ou la seconde interface d'accès mobile active à tout instant.

6. Produit-programme d'ordinateur
qui, lorsqu'il est chargé dans un ordinateur, réalise le procédé selon l'une quelconque des revendications 1 à 5.

7. Support porteur sur lequel est enregistré un produit-programme d'ordinateur selon la revendication 6.

8. Sous-système multimédia de protocole Internet, IMS, pour déployer des services multimédias de protocole Internet vers des terminaux de communications, le sous-système multimédia de protocole Internet étant opérationnel
pour enregistrer un terminal mobile (1) pour déployer des sessions de communications multimédia vers le terminal mobile (1) via un premier réseau d'accès mobile (2) et un second réseau d'accès mobile (30), l'enregistrement incluant une authentification et une autorisation du terminal mobile (1), le terminal mobile (1) étant opérationnel en tant que terminal appelant pour communiquer un message de demande de mise en place pour demander une voie porteuse via ledit premier réseau d'accès mobile (2) pour communiquer des données d'utilisateur à et depuis un terminal correspondant (40) servant de terminal appelé pour prendre en charge une session de communications avec le terminal correspondant (40), le premier réseau d'accès mobile (2) étant opérationnel pour communiquer un message de mise en place de session au sous-système multimédia de protocole Internet, le message de mise en place de session incluant un identifiant du terminal mobile (1) et un identifiant du terminal correspondant (40), le sous-système multimédia de protocole Internet étant opérationnel
pour lancer la session de communications entre le terminal mobile (1) et le terminal correspondant laissant la session de communications non confirmée auprès du terminal mobile (1), et
suite à l'itinérance du terminal mobile (1) du premier réseau d'accès mobile (2) au second réseau d'accès mobile (30) et la demande d'une porteuse de communications via le second réseau d'accès mobile (30) pour poursuivre la session de communications via le second réseau d'accès mobile (30),
pour établir la porteuse de communications via le second réseau d'accès mobile (30),
pour lancer une mise en place de session avec le terminal mobile (1) et servir de terminaison pour la session de communications avec le terminal mobile (1), comprenant
la communication d'un message de confirmation au terminal mobile (1) via le second réseau d'accès mobile (30) confirmant que la session de communications a été établie avec le terminal mobile (1), la fourniture de la porteuse de communications via le second réseau d'accès mobile (30) pour poursuivre la session de communications avec le terminal mobile (1) via le second réseau d'accès mobile (30),
et dans lequel le sous-système multimédia de protocole Internet est en outre opérationnel pour établir la porteuse de communications via le second réseau d'accès mobile (30), en réponse à au moins l'un d'un déclenchement depuis une couche de radiocommunications du second réseau d'accès mobile (30), d'un déclenchement depuis une couche de communications réseau de l'accès mobile, ou en réponse à un message de lancement de session reçu par le sous-système multimédia de protocole Internet depuis le second réseau d'accès mobile (30).

9. Sous-système multimédia de protocole Internet selon la revendication 8, dans lequel le déclenchement depuis la couche de communications réseau inclut une réception d'un message de demande d'application de contexte de protocole de données par paquet.

10. Sous-système multimédia de protocole Internet selon la revendication 8 ou 9, dans lequel le message de demande d'application de contexte de protocole de données par paquet est une demande pour qu'une porteuse de communications poursuive la session de communications avec le terminal correspondant (40) via le second réseau d'accès mobile (30), le second réseau d'accès mobile (30) étant opérationnel pour communiquer la demande au sous-système multimédia de protocole Internet, le sous-système multimédia de protocole Internet est opérationnel
pour communiquer des données de signalisation au terminal mobile (1) via le second réseau d'accès mobile (30), pour lancer une session de communications avec le terminal mobile (1) via le second réseau d'accès mobile (30) pour établir la porteuse via le second réseau d'accès mobile (30) et pour s'arranger pour que la session de communications se poursuive via la porteuse du second réseau d'accès mobile (30) avec le terminal correspondant (40).

11. Sous-système multimédia de protocole Internet selon la revendication 10, dans lequel la session de communications inclut la communication de données d'utilisateur représentatives de communications vocales entre le terminal mobile (1) et le terminal correspondant (40), les porteuses de communications établies par au moins l'un du premier réseau d'accès mobile (2) et du second réseau d'accès mobile (30) étant via des paquets de protocole Internet.

12. Sous-système multimédia de protocole Internet selon l'une quelconque des revendications 8 à 11, dans lequel le terminal mobile (1) est agencé pour avoir uniquement une interface d'accès pour communiquer via la première ou la seconde interface d'accès mobile active à tout instant.
